# EUROPEAN PATENT SPECIFICATION

(11) **EP 2 013 680 B1**
(45) Date of publication and mention of the grant of the patent: **08.08.2018**
(21) Application number: 07761064.0
(22) Date of filing: 20.04.2007
(51) Int. Cl.: G06F 9/455, G06F 8/41

(54) **METHOD AND APPARATUS FOR RESOLVING CLOCK MANAGEMENT ISSUES IN EMULATION INVOLVING BOTH INTERPRETED AND TRANSLATED CODE**
VERFAHREN UND VORRICHTUNG ZUR LÖSUNG VON TAKTVERWALTUNGSPROBLEMEN BEI EMULIERUNGEN MIT INTERPRETIERTEM UND ÜBERSETZTEM CODE
PROCÉDÉ ET APPAREIL POUR RÉSOUDRE DES QUESTIONS DE GESTION D'HORLOGE DANS L'ÉMULATION CONCERNANT UN CODE À LA FOIS INTERPRÉTÉ ET TRADUIT

(30) Priority: 03.05.2006 US 746267 P; 03.05.2006 US 746268 P; 03.05.2006 US 746273 P; 03.05.2006 US 797435 P; 03.05.2006 US 797761 P; 03.05.2006 US 797762 P; 30.01.2007 US 700448; 04.04.2007 US 696691; 04.04.2007 US 696699; 04.04.2007 US 696684
(43) Date of publication of application: 14.01.2009
(60) Divisional application: 11169077.2
(73) Proprietor: Sony Interactive Entertainment Inc., Tokyo 108-8270 (JP)
(72) Inventor: SARGAISON, Stewart, Foster City, California 94404 (US); SUBA, Victor, Foster City, California 94404 (US); WATSON, Brian, Foster City, California 94404 (US)
(74) Representative: D Young & Co LLP
(86) International application number: PCT/US2007/067146
(87) International publication number: WO 2007/130807

(56) References cited:
- EP-A- 0 945 796
- US-A- 6 115 054
- US-B1- 6 672 963
- US-B1- 6 882 968
- US-B1- 6 882 968

## Description

### FIELD OF THE INVENTION

Embodiments of this invention relate to emulation of a target computer platform on a host computer platform and more particularly to clock management where certain components of the target platform are emulated by interpretation and other components are emulated by translation.

### BACKGROUND OF THE INVENTION

The process of emulating the functionality of a first computer platform (the "target system") on a second computer platform (the "host system") so that the host system can execute programs designed for the target system is known as "emulation." Emulation has commonly been achieved by creating software that converts program instructions designed for the target platform (target code instructions) into the native-language of a host platform (host instructions), thus achieving compatibility. More recently, emulation has also been realized through the creation of "virtual machines," in which the target platform's physical architecture--the design of the hardware itself--is replicated via a virtual model in software.

Two main types of emulation strategies currently are available in the emulation field. The first strategy is known as "interpretation", in which each target code instruction is decoded in turn as it is addressed, causing a small sequence of host instructions then to be executed that are semantically equivalent to the target code instruction. The main component of such an emulator is typically a software interpreter that converts each instruction of any program in the target machine language into a set of instructions in the host machine language, where the host machine language is the code language of the host computer on which the emulator is being used. In some instances, interpreters have been implemented in computer hardware or firmware, thereby enabling relatively fast execution of the emulated programs.

The other main emulation strategy is known as "translation", in which the target instructions are analyzed and decoded. This is also referred to as "recompilation" or "cross-compilation". It is well known that the execution speed of computer programs is often dramatically reduced by interpreters. It is not uncommon for a computer program to run ten to twenty times slower when it is executed via emulation than when the equivalent program is recompiled into target machine code and the target code version is executed. Due to the well known slowness of software emulation, a number of products have successfully improved on the speed of executing source applications by translating portions of the target program at run time into host machine code, and then executing the recompiled program portions. While the translation process may take, e.g., 50 to 100 machine or clock cycles per instruction of the target code, the greater speed of the resulting host machine code is, on average, enough to improve the overall speed of execution of most source applications.

Whether the target code is interpreted or translated, it is likely that the host machine will execute the resulting interpreted or translated instructions at a different rate than the target machine would execute the original target instructions. Consequently, the host machine may run faster or slower than the target machine being emulated. Such differences in execution speed may be tolerable--or even desirable--in programs like word processors and spreadsheets. However, these differences in execution speed are a significant issue for timing-critical operations like: (1) sound and video playback; (2) processing "streaming" information, where data is delivered to the processor at a constant rate; and (3) games and animations which require screen updates to display motion accurately.

Different rates of execution for the target and host machines may be addressed in software, e.g., by adjusting the execution rate of the host machine. For example, US Patent 6,882,968 to Linden describes a method for simulating the timing characteristics of a target platform designed for consistent instruction execution speed by measuring, predicting and dynamically adjusting for timing variability within a host platform. This technique uses an arbitrary "time quantum" as a referent that is multiplied by the target system's instruction cycle execution speed to determine the number of instructions the target system executes in a specified time.

When non-native code is executed on the host system, a counter is used to track the number of instructions executed and to interrupt when a target number is reached. A processor-activity-independent timing source is queried to determine the time elapsed. The elapsed time is then compared to the original "time quantum." The resulting ratio is a timing reference that is independent of the operating speed characteristics of any particular host system. This reference is used to predict the operational speed of the host system and to adjust factors in the host computer and emulation process to more accurately match the target system before executing the next block of instructions and repeating the process.

Although this system may work where the target instruction execution speed is consistent it does not address situations where different parts of the target system are emulated in different ways and have different clock rates. For example, one component of a target system may be emulated by interpretation, in which case the interpreted target instructions are run on the host system with a fixed clock. A different component of the target machine, however, may be emulated by translation, in which case the translated target instructions are run on the host system using a variable clock. Management of these two different clocks on the host system presents entirely different problems.

Other background art is described in: EP-A-0 945 796 which relates to a simulation method, simulation apparatus and storage medium storing a simulation program; and US-B-6 672 963 which relates to a software implementation of a handheld video game hardware platform.

Thus, there is a need in the art, for emulation systems and methods that address these problems.

### SUMMARY OF THE INVENTION

To overcome the above disadvantages, embodiments of the invention are directed to methods and systems for resolving clock management issues in emulation of a target system on a host system.

In a first aspect, there is provided computer software in accordance with claim 1 appended hereto.

In a second aspect there is provided a host system in accordance with claim 14 appended hereto.

For example, execution of the translated instructions or memory access may be held back when the variable clock is running faster than the fixed clock. Alternatively, the clock rate may be adjusted based on an efficiency of use of some component of the target system by one or more portions of the target program. In a situation where there is not sufficient time for the host device to complete a translated instruction operation before a frame must be presented to a display device a current frame may be repeated to provide additional time to complete the translated instruction operation. In some embodiments, the execution of emulation of the target program may be altered in a way that avoids timing out if the target program polls a hardware register greater than a predetermined number of times. In other situations, one emulated component of the target system may write an instruction that is read by another component. These instructions may be stored in a journal and read from the journal in an order in which they were written to keep the reading component from passing the writing component.

### BRIEF DESCRIPTION OF THE DRAWINGS

The teachings of the present invention can be readily understood by considering the following detailed description in conjunction with the accompanying drawings, in which:
FIG. 1A is a block diagram of a target device that is to be emulated according to an embodiment of the present invention.
FIG. 1B is a block diagram of an emotion engine of the target device of FIG. 1A.
FIG. 2A is a schematic diagram of a host device that emulates the target device of FIGs. 1A-1B.
FIG. 2B is a flow diagram illustrating management of different clock rates for emulation of different parts of the target device according an embodiment of the present invention.
FIG. 2C is a flow diagram illustrating management of different clock rates for emulation of different parts of the target device according an alternative embodiment of the present invention.
FIG. 3 is a flow diagram illustrating management of different clock rates for emulation of different parts of the target device according another alternative embodiment of the present invention.
FIG. 4 is a flow diagram illustrating time out tracking control for emulation of the target device according another alternative embodiment of the present invention.
FIG. 5 is a flow diagram illustrating the use of a read/write journal in emulation according to an embodiment of the present invention.

### DESCRIPTION OF THE SPECIFIC EMBODIMENTS

Although the following detailed description contains many specific details for the purposes of illustration, anyone of ordinary skill in the art will appreciate that many variations and alterations to the following details are within the scope of the invention. Accordingly, the exemplary embodiments of the invention described below are set forth without any loss of generality to, and without imposing limitations upon, the claimed invention.

As described above, most emulation techniques involve either interpretation, using a fixed clock, or translation using a variable clock. In emulation of certain game console devices such as the Sony PlayStation®2 (PS2), certain target components are emulated by translation and others are emulated by translation. PlayStation is a registered trademark of Sony Computer Entertainment Corporation of Tokyo, Japan. Embodiments of the present invention address clock management issues that arise from the different types of emulation used to emulate different components of the target device.

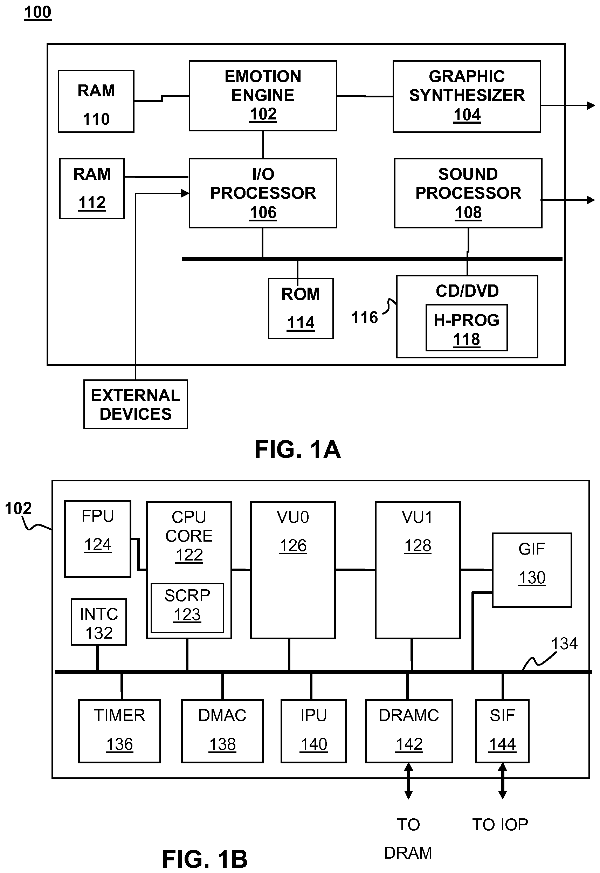

By way of example FIG. 1A depicts a block diagram of a target system **100** in the form of a game console device. The target system is built around a main processor module **102** referred to as an emotion engine (EE), a Graphic Synthesizer **104,** an input/output (I/O) processor (IOP) **106** and a sound processor unit **108.** The emotion engine **102** typically includes a CPU core, co-processors and a system clock and has an associated random access memory (RAM) **110.** The emotion engine **102** performs animation calculation, traverses a scene and converts it to a two-dimensional image that is sent to the Graphic Synthesizer (GS) **104** for rasterization.

As shown in FIG. 1B, the EE **102** includes a CPU core **122,** with an associated floating point unit (FPU)coprocessor **124,** first and second vector co-processors **126, 128,** a graphics interface controller **130** and an interrupt controller (INTC) **132.** The CPU **122,** vector co-processors **126, 128,** GIF **130** and INTC **132** are coupled to a 128-bit main bus **134.** The FPU **124** is directly coupled to the CPU **122.** The CPU **122** is coupled to a first vector co-processor (VU0) **126,** which is, in turn, coupled to a second vector co-processor (VU1) **128.** The second vector co-processor **VU1 128** is coupled to a graphics interface (GIF) **130.** The EE **102** additional includes a timer **136,** a direct memory access controller (DMAC) **138,** an image data decompression processor (IPU) **140** a DRAM controller **142** and a sub-bus interface (SIF) **144** that facilitates communication between the EE **102** and the IOP **106.**

The CPU core **122** may be a 128-bit processor operating at a 300 megahertz clock frequency using a MIPS instruction set with 64-bit instructions operating as a 2-way superscalar with 128-bit multimedia instructions. The CPU **122** may include a data cache, an instruction cache and an area of on-chip memory **123** sometimes referred to as a scratchpad. The scratchpad **123** serves as a small local memory that is available so that the CPU **122** can perform certain operations while the main bus **134** is busy transferring code and/or data. The first vector unit **126** may be used for animation and physics calculations. The second vector unit **128** may be used for geometry transformations. The GIF **130** serves as the main interface between the EE **102** and the GS **104.**

The IOP **106** may include a processor for backwards compatibility with prior versions of the target system **100** and its own associated RAM **112.** The IOP **106** handles input and output from external devices such as controllers, USB devices, a hard disc, Ethernet card or modem, and other components of the system such as the sound processor unit **108,** a ROM **114** and a CD/DVD unit **116.** A target program **118** may be stored on a CD/ROM disc loaded in the CD/DVD unit **116.** Instructions from the target program **118** may be stored in EE RAM **108** or IOP RAM **112** and executed by the various processors of the target system **100** in a native machine code that can be read by these processors.

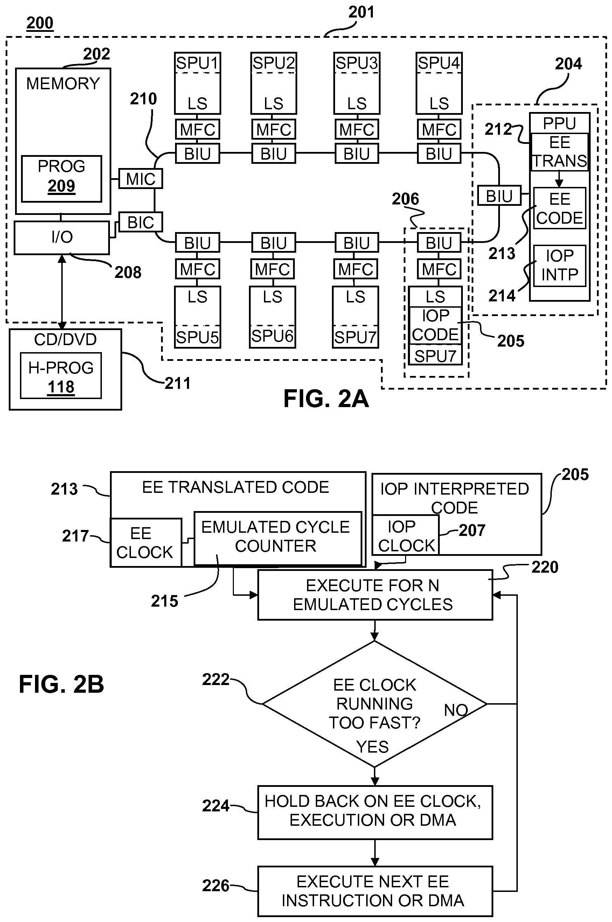

In embodiments of the present invention, the target system **100** may be emulated using a parallel processing host system **200** so that the host system **200** can run programs written in code native to the target system **100** such as target program **118.** FIG. 2A depicts an example of a host system **200** based on a cell processor **201** that may be configured to emulate the target system **100.** The cell processor **201** includes a main memory **202,** a single power processor element (PPE) **204** and eight synergistic processor elements (SPE) **206.** However, the cell processor **201** may be configured with more than one PPE and any number of SPE's. Each SPE **206** includes a synergistic processor unit (SPU) and a local store (LS). The memory **202,** PPE **204,** and SPEs **206** can communicate with each other and with an I/O device **208** over a ring-type element interconnect bus (EIB) **210.** The PPE **204** and SPEs **206** can access the EIB **210** through bus interface units (BIU). The PPE **204** and SPEs **206** can access the main memory **202** over the EIB **210** through memory flow controllers (MFC). The memory **202** may contain an emulation program **209** that implements interpretation and translation of coded instructions written for the target system **100.** These coded instructions may be read from a CD/ROM disc in a CD/DVD reader **211** coupled to the I/O device **208.** A CD/ROM disc containing the target program **118** may be loaded into the CD/DVD reader **211.** At least one of the SPE **206** receives in its local store emulated IOP code **205** having instructions that emulate the IOP **106** described above with respect to FIGs. 1A-1B.

By way of example, in an embodiment of the invention, a translator **212** running on the PPE **204** may emulate the EE **102** of the target system **100** by translating EE instructions of the target program **118** into machine code **213** that can be run on the PPE **204.** The translated code **213** uses a variable clock. In this embodiment of the invention the PPE **204** implements an interpreter **214** that emulates the IOP **106** by interpreting IOP instructions of the target program **118.** The interpreter **214** is run using a fixed clock.. On the target system **100,** the IOP clock rate may be significantly less (e.g., about 1/100^{th} of) the clock rate for the cell processor **201.** As a result, some translated EE code may run too fast and some may run too slow. In addition, some programs written for the target system **100** may have different efficiencies of using the EE **102.** As a result, different parts of the emulated program may run too fast or too slow.

This program **209** can address the different clock rates by holding back execution or direct memory access (DMA) when the EE clock is running too fast (i.e., faster than the IOP clock) in order to synchronize the IOP and EE clocks. For example, as depicted in FIG. 2B, the translated EE code **213** may use an emulated cycle counter **215** to estimate how long an operation will take. The timing of the execution of translated EE code instructions is keyed to a variable EE clock **217.** Similarly, the timing of the execution of interpreted IOP code **205** is keyed to a fixed IOP clock **207.** The program **209** executes for some number **N** of emulated cycles as indicated at **220.** After executing for N cycles, the program **209** can check to see if the IOP clock **207** and EE clock **217** are synchronized. For example, at **222** the program **209** may check to see if the EE clock **217** is running faster than the IOP clock **207.** If not, normal execution may proceed for another N cycles. If so, the program **209** can hold back the EE clock as indicated at **224,** e.g., by inserting a number of "no operation" (NOP) instructions into the translated code before executing the next EE or DMA instruction as indicated at **226.**

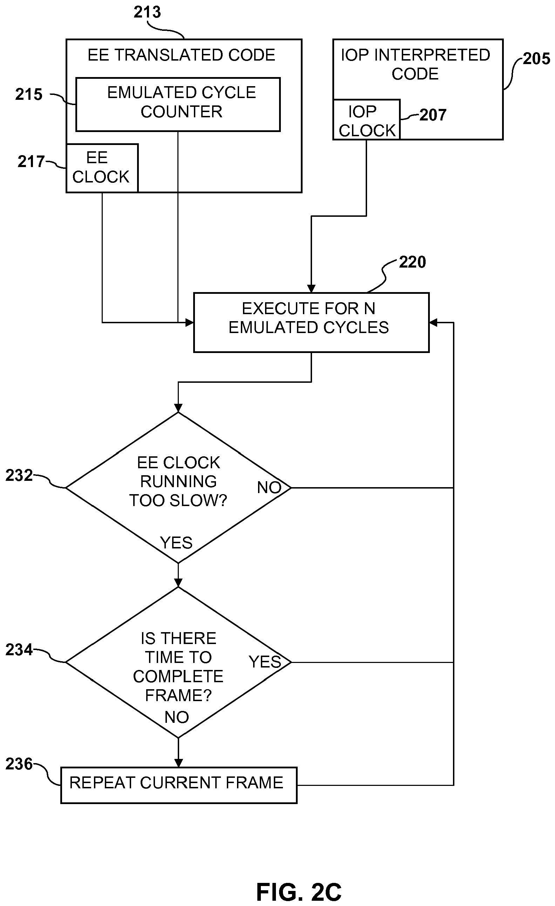

In some situations there may not sufficient time for the translated code **213** to complete an EE operation before a frame must be presented to a display device such as a CRT monitor, television or the like. As shown in FIG. 2C, the program **209** running on the host system **200** may determine at **232** if the EE clock is too slow. If it is and if, at **234** it is determined that there is not enough time to complete the frame being processed repeat a frame at **236,** e.g., the current frame, i.e., the frame currently being presented to the screen or the frame most recently presented, to provide additional time to make up for slower execution of the translated EE code **213.**

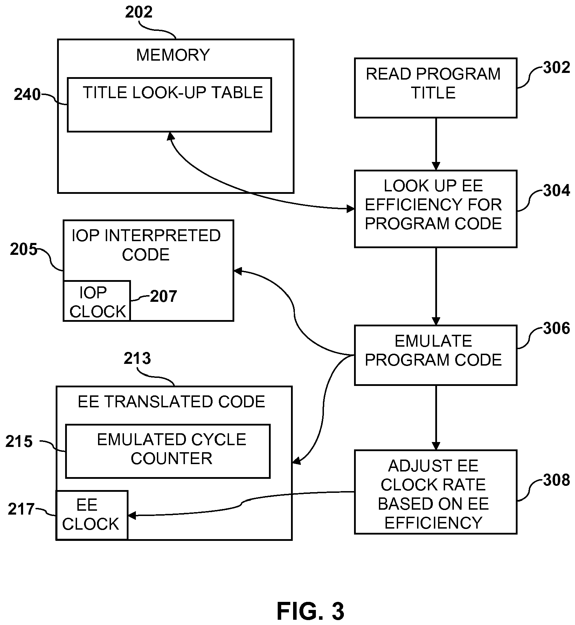

In certain embodiments of the invention, the code for a given target program title may be analyzed for EE use efficiency and the EE clock rate may be adjusted based on the efficiency for different parts of the code. For example as shown in FIG. 3 the memory **202** may contain a look-up table **240** containing EE efficiency data for different programs that can be run on the target system **100.** Since different parts of a program may use the EE with different efficiencies, the EE efficiency data for a given program may include multiple entries with each entry pertaining to a different part of the program. The data for the look-up table **240** may be generated by analyzing known target system programs for efficiency. In the particular case of programs for a game console, such as the Sony Playstation®2, an EE analyzer may be used to determine the efficiency of EE use for the various sections of the target system program **118.**

The program **209** may make use of the data in the look-up table as shown at the right-hand side of FIG. 3. Specifically, the program **209** may read the title of a target system program (e.g., a game title from a game CD in the CD/DVD reader **211)** as indicated at **302.** Based on the title, the program **209** may then look-up the EE efficiency for one or more sections of the target system program, as indicated at **304.** The program **209** may execute emulation of the host machine program as indicated at **306** using the interpreted IOP code **205,** fixed IOP clock **207,** translated EE code **213,** and variable EE clock **217** described above. The emulation program **209** may adjust the clock rate for the EE clock **217** based on the EE efficiency for a portion of the target system program as indicated at **308.** For example, if a section of the target system program has a relatively high efficiency the EE clock rate may be increased for those sections. Similarly, the EE clock rate may be correspondingly reduced for sections of the target system program having low EE efficiency.

During emulation of certain hardware there is a possibility that certain events may time out due to a difference in clock rates between the target system **100** and the host system **200.** For example some target system programs may often set a value in a control register and then poll it repeatedly to wait for a result. Such programs may include time-out code that indicates a hardware error if the polling is unsuccessful after a given number of tries. However, if the target program **118** runs much faster on the host system **200,** this count may be exceeded during emulation even though there is no hardware error.

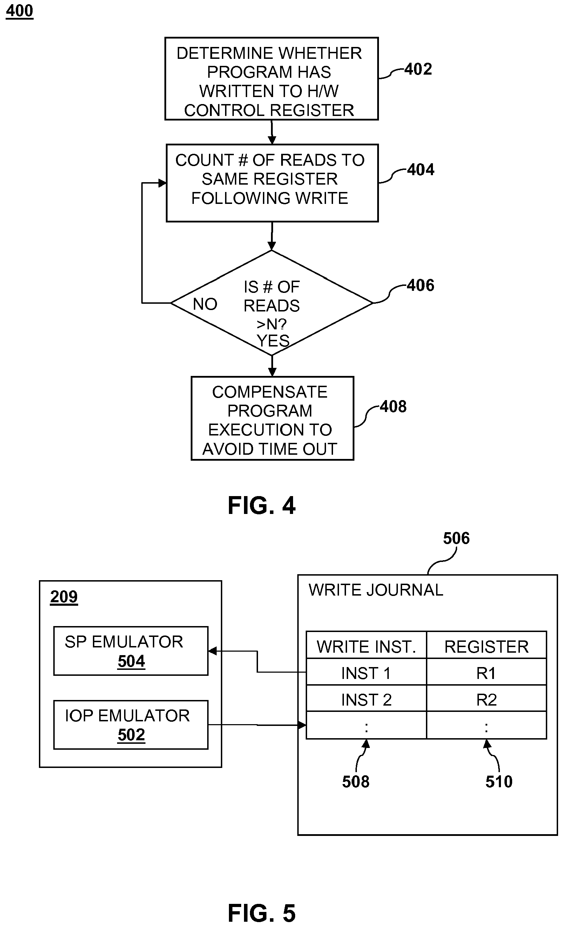

The emulation program **209** may include hardware emulation code, i.e., software code that emulates certain hardware on the target system **100.** The hardware emulation code can include a time-out tracking control that determines if a time-out hazard exists and compensates for the hazard by altering the execution of the emulation of the target program **118** in a way that avoids timing out. An example of a time-out tracking control method **400,** is illustrated e.g., in FIG. 4. At **402** it is determined whether the target program **118** has written to a hardware control register. For example, a memory mapped read to H/W, e.g., using memory-mapped I/O (MMIO) may be used as an indication that the target program **118** has written to a hardware control register. A count may be kept on the number of successive reads to the same register as indicated at **404.** By way of example, certain registers in the EE components, such as the vector co-processor units **126, 128** and the IPU **140,** can use time-out tracking. If at **406** the number of successive reads exceeds a threshold of N reads (e.g. 50 reads after a single write), the hardware emulation code determines that the host system software is trying to poll this register. In response, the hardware emulation code compensates to prevent timing out, as indicated at **408.** For example the hardware emulation code may slow down by a sufficient margin to prevent the host system software from reaching a time-out. Alternatively, the hardware emulation code does not return any response to the emulated host system software until the hardware state changes (e.g. the emulated hardware has finished the requested operation).

Alternatively, a relevant section of the target program **118** can be analyzed to determine whether a polling operation is occurring (as exhibited, e.g., by the presence of short loops of code) as distinguished from do-nothing timing loops and memory copy operations that do not present a time-out hazard. While time-out tracking is engaged, the emulated hardware may still perform unrelated functions, such as interrupt handling.

On the target system **100,** the EE **102** may read from one device and write to another device. For example the EE **102** may read data from the IOP **106,** process the data and write processed results to the GS **104.** In emulation of such an operation on the host system **200** it is important to keep the reader from passing the writer. If the part of the emulation program **209** emulating the read operation stalls, the part of the program **209** emulating the writing operation needs to know where the stall is. On the target system **100,** devices that read or write to EE RAM **108,** scratch pad **123,** IPU **140** and SIF **144,** can tell the other devices where the stall address is.

For example, as illustrated in FIG. 5, when an IOP emulator **502** writes instructions to a sound processor emulator **504** the timing and order of write instructions is important to the sound processor emulator **504.** Instructions that the IOP emulator **502** writes to the sound processor emulator **504** are stored in a write "journal" **506** that records order of all sound processor write instructions **508** and sound processor register values **510.** The sound processor emulator **504** pulls the write instructions **508** in order from journal **506** along with the corresponding register values **510.** By pulling the write instructions **508** from the journal **506** in the order that they were written, the reader (in this case the sound processor) does not get ahead of the writer (the IOP). The concept illustrated in FIG. 5 can be generally applied to any pair of emulated components of the target system **100** where one component writes data or instructions that the other reads. By way of example, the IOP emulator **502** and the sound processor emulator **504** may be implemented by SPEs **206** on the cell processor **201** described above with respect to FIG. 2A.

While the above is a complete description of the preferred embodiment of the present invention, it is possible to use various alternatives, modifications and equivalents. Therefore, the scope of the present invention should be determined not with reference to the above description but should, instead, be determined with reference to the appended claims, along with their full scope of equivalents. Any feature described herein, whether preferred or not, may be combined with any other feature described herein, whether preferred or not. In the claims that follow, the indefinite article "A", or "An" refers to a quantity of one or more of the item following the article, except where expressly stated otherwise. The appended claims are not to be interpreted as including means-plus-function limitations, unless such a limitation is explicitly recited in a given claim using the phrase "means for."

## Claims

1. Computer software having program code which, when executed by a computer, causes the computer to carry out a method for resolving clock management issues in emulation of a target system (100) on a host system (200), the method comprising:
interpreting a first set of code instructions of a target program to generate interpreted code instructions that emulate a first component of the target system (100) on the host system (200);
translating a second set of code instructions to generate translated code instructions that emulate a second component of the target system (100) on the host system (200);
executing the interpreted instructions, wherein timing of the execution of the interpreted instructions is based on a fixed clock (207);
executing the translated instructions, wherein timing of the execution of the translated instructions is based on a variable clock (217); and
maintaining a desired synchronization between the translated instructions and the interpreted instructions by adjusting a clock rate of the variable clock (217), adjusting timing of an execution of the translated or interpreted instructions, or adjusting timing of a memory access.

2. The computer software of claim 1, wherein adjusting the clock rate of the variable clock, adjusting the timing of execution of the translated or interpreted instructions, or adjusting the timing of the memory access includes holding back execution of the translated instructions or memory access when the variable clock is running faster than the fixed clock.

3. The computer software of claim 1, wherein the translated instructions use an emulated cycle counter to estimate how long an operation will take.

4. The computer software of claim 2, wherein holding back execution of the translated instructions or memory access when the variable clock is running faster than the fixed clock includes executing a predetermined number of emulated cycles, checking to see if the variable clock is running faster than the fixed clock; and if the variable clock is running faster than the fixed clock, holding back the variable clock.

5. The computer software of claim 1, wherein, in a situation where there is not sufficient time for the host device to complete a translated instruction operation before a frame must be presented to a display device, adjusting the clock rate of the variable clock, adjusting the timing of execution of the translated or interpreted instructions or adjusting the timing of a memory access includes repeating a current frame to provide additional time to complete the translated instruction operation.

6. The computer software of claim 1, wherein adjusting the clock rate of the variable clock, adjusting the timing of execution of the translated or interpreted instructions, or adjusting the timing of a memory access includes:
looking up an efficiency of use of the second component by one or more portions of the target program and adjusting the clock rate of the variable clock based on the efficiency of use;
or wherein adjusting the clock rate of the variable clock, adjusting the timing of execution of the translated or interpreted instructions, or adjusting the timing of a memory access to maintain a desired synchronization between the translated instructions and the interpreted instructions includes:
determining whether an emulated event may time out due to a difference between a clock rate of the fixed clock and the clock rate of the variable clock; and
adjusting the execution of the translated instructions to avoid a time-out of the emulated event.

7. The computer software of claim 6, wherein determining whether an emulated event may time out due to a difference in between the clock rate of the fixed clock and the clock rate of the variable clock includes detecting whether the target program has set a value in a control register and then polled the control register repeatedly to wait for a result.

8. The computer software of claim 7, wherein adjusting the execution of the translated instructions to avoid the time out includes:
altering the execution of emulation of the target program in a way that avoids timing out if the target program polls the register greater than a predetermined number of times.

9. The computer software of claim 8, wherein altering the execution of emulation of the target program includes avoiding the time out by slowing down the emulation by a sufficient margin to prevent the time-out.

10. The computer software of claim 8, wherein altering the execution of emulation of the target program includes not returning any response to the emulated target program until a hardware state changes.

11. The computer software of claim 8, wherein altering the execution of emulation of the target program includes analyzing a relevant section of the target program and determining whether a polling operation is occurring.

12. The computer software of claim 7, further comprising performing functions unrelated to the time-out with emulated hardware while avoiding a time-out of the emulated event by adjusting the execution of the translated instructions.

13. The computer software of claim 1, wherein executing the translated and/or interpreted instructions includes writing one or more write instructions from a first emulated device and reading the one or more write instructions with a second emulated device, wherein adjusting the clock rate of the variable clock, adjusting timing of execution of the translated or interpreted instructions, or adjusting timing of a memory access includes:
storing the one or more write instructions in a journal in an order in which they were written and reading the one or more write instructions with the second emulated device in the order in which they were written.

14. A host system (200) for emulating a target system (100), the host system (200) comprising:
one or more processors (204);
a memory (202) coupled to the one or more processors (204);
a set of processor executable instructions embodied in the memory (202), the processor executable instructions including instructions for implementing a method for resolving clock management issues in emulation of the target system (100) on the host system (200),
the one or more processors (204) comprising:
means for interpreting a first set of code instructions of a target program to generate interpreted code instructions that emulate a first component of the target system (100) on the host system (200);
means for translating a second set of code instructions to generate translated code instructions that emulate a second component of the target system (100) on the host system (200);
means for executing the interpreted instructions, wherein timing of the execution of the interpreted instructions is based on a fixed clock (207);
means for executing the translated instructions, wherein timing of the execution of the translated instructions is based on a variable clock (217); and
means for maintaining a desired synchronization between the translated instructions and the interpreted instructions by adjusting the clock rate of the variable clock (217), adjusting timing of an of execution of the translated or interpreted instructions, or adjusting timing of a memory access.

## Patentansprüche

1. Computersoftware, die Programmcode besitzt, der, wenn er durch einen Computer ausgeführt wird, bewirkt, dass der Computer ein Verfahren zum Lösen von Taktmanagementproblemen bei der Emulation eines Zielsystems (100) auf einem Host-System (200) ausführt, wobei das Verfahren Folgendes umfasst:
Interpretieren eines ersten Satzes von Codeanweisungen eines Zielprogramms, um interpretierte Codeanweisungen zu erzeugen, die eine erste Komponente des Zielsystems (100) auf dem Host-System (200) emulieren;
Übersetzen eines zweiten Satzes von Codeanweisungen, um übersetzte Codeanweisungen zu erzeugen, die eine zweite Komponente des Zielsystems (100) auf dem Host-System (200) emulieren;
Ausführen der interpretierten Anweisungen, wobei die Zeitplanung der Ausführung der interpretierten Anweisungen auf einem festen Takt (207) basiert;
Ausführen der übersetzten Anweisungen, wobei die Zeitplanung der Ausführung der übersetzten Anweisungen auf einem veränderbaren Takt (217) basiert; und
Aufrechterhalten einer gewünschten Synchronisation zwischen den übersetzten Anweisungen und den interpretierten Anweisungen durch Anpassen einer Taktrate des veränderbaren Taktes (217), Anpassen einer Zeitplanung einer Ausführung der übersetzten oder interpretierten Anweisungen oder Anpassen einer Zeitplanung eines Speicherzugriffs.

2. Computersoftware nach Anspruch 1, wobei das Anpassen der Taktrate des veränderbaren Taktes, das Anpassen der Zeitplanung der Ausführung der übersetzten oder der interpretierten Anweisungen oder das Anpassen der Zeitplanung des Speicherzugriffs die Ausführung der übersetzten Anweisungen oder des Speicherzugriffs aufhält, wenn der veränderbare Takt schneller als der feste Takt läuft.

3. Computersoftware nach Anspruch 1, wobei die übersetzten Anweisungen einen emulierten Zykluszähler verwenden, um zu schätzen, wie lange ein Vorgang dauern wird.

4. Computersoftware nach Anspruch 2, wobei das Aufhalten der Ausführung der übersetzten Anweisungen oder des Speicherzugriffs, wenn der veränderbare Takt schneller als der feste Takt läuft, das Ausführen einer vorgegebenen Anzahl emulierter Zyklen enthält, um zu prüfen, ob der veränderbare Takt schneller als der feste Takt läuft; und dann, wenn der veränderbare Takt schneller als der feste Takt läuft, Aufhalten des veränderbaren Taktes.

5. Computersoftware nach Anspruch 1, wobei in einer Situation, in der nicht ausreichend Zeit zur Verfügung steht, dass die Host-Einrichtung einen übersetzten Anweisungsvorgang abschließen kann, bevor ein Block auf einer Anzeigeeinrichtung dargestellt werden muss, das Anpassen der Taktrate des veränderbaren Taktes, das Anpassen der Zeitplanung der Ausführung der übersetzten oder interpretierten Anweisungen oder das Anpassen der Zeitplanung eines Speicherzugriffs das Wiederholen eines aktuellen Blocks enthält, um zusätzliche Zeit bereitzustellen, um den übersetzten Anweisungsvorgang abzuschließen.

6. Computersoftware nach Anspruch 1, wobei das Anpassen der Taktrate des veränderbaren Taktes, das Anpassen des Zeitplans der Ausführung der übersetzten oder interpretierten Anweisungen oder das Anpassen des Zeitplans eines Speicherzugriffs Folgendes enthält:
Nachschlagen einer Anwendungseffizienz der zweiten Komponente durch einen oder mehrere Abschnitte des Zielprogramms und Anpassen der Taktrate des veränderbaren Taktes auf der Grundlage der Anwendungseffizienz;
oder wobei das Anpassen der Taktrate des veränderbaren Taktes, das Anpassen des Zeitplans der Ausführung der übersetzten oder interpretierten Anweisungen oder das Anpassen des Zeitplans eines Speicherzugriffs, um eine gewünschte Synchronisation zwischen den übersetzten Anweisungen und den interpretierten Anweisungen aufrechtzuerhalten, Folgendes enthält:
Bestimmen, ob ein emuliertes Ereignis die Zeitbeschränkung aufgrund einer Differenz zwischen einer Taktrate des festen Taktes und der Taktrate des veränderbaren Taktes überschreiten kann; und
Anpassen der Ausführung der übersetzten Anweisungen, um eine Zeitüberschreitung des emulierten Ereignisses zu vermeiden.

7. Computersoftware nach Anspruch 6, wobei das Bestimmen, ob ein emuliertes Ereignis die Zeitbeschränkung aufgrund einer Differenz zwischen einer Taktrate des festen Taktes und der Taktrate des veränderbaren Taktes überschreiten kann, das Detektieren enthält, ob das Zielprogramm einen Wert in einem Steuerregister gesetzt und dann das Steuerregister wiederholt abgefragt hat, um auf ein Ergebnis zu warten.

8. Computersoftware nach Anspruch 7, wobei das Anpassen der Ausführung der übersetzten Anweisungen, um die Zeitüberschreitung zu vermeiden, Folgendes umfasst:
Verändern der Ausführung der Emulation des Zielprogramms in einer Weise, die ein Überschreiten einer Zeitbeschränkung vermeidet, wenn das Zielprogramm das Register mehro als eine bestimmte Anzahl von Malen abfragt.

9. Computersoftware nach Anspruch 8, wobei das Verändern der Ausführung der Emulation des Zielprogramms das Vermeiden der Zeitüberschreitung durch Verlangsamen der Emulation um eine Marge, die ausreicht, um die Zeitüberschreitung zu vermeiden, enthält.

10. Computersoftware nach Anspruch 8, wobei das Verändern der Ausführung der Emulation des Zielprogramms das Zurückgeben keiner Antwort an das emulierte Zielprogramm, bevor sich ein Hardwarezustand ändert, enthält.

11. Computersoftware nach Anspruch 8, wobei das Verändern der Ausführung der Emulation des Zielprogramms das Analysieren eines relevanten Abschnitts des Zielprogramms und das Bestimmen, ob ein Abfragevorgang stattfindet, enthält.

12. Computersoftware nach Anspruch 7, die ferner das Durchführen von Funktionen, die nicht mit der Zeitüberschreitung in Beziehung stehen, mit emulierter Hardware umfasst, während eine Zeitüberschreitung des emulierten Ereignisses durch Anpassen der Ausführung der übersetzten Anweisungen vermieden wird.

13. Computersoftware nach Anspruch 1, wobei das Ausführen der übersetzten und/oder interpretierten Anweisungen ein Schreiben einer oder mehrerer Schreibanweisungen von einer ersten emulierten Einrichtung und ein Lesen der einen oder der mehreren Schreibanweisungen mit einer zweiten emulierten Einrichtung enthält, wobei das Anpassen der Taktrate des veränderbaren Taktes, das Anpassen der Zeitplanung der Ausführung der übersetzten oder interpretierten Anweisungen oder das Anpassen der Zeitplanung des Speicherzugriffs Folgendes enthält:
Speichern der einen oder der mehreren Schreibanweisungen in der Reihenfolge, in der sie geschrieben wurden, in ein Protokoll und Lesen der einen oder der mehreren Schreibanweisungen in der Reihenfolge, in der sie geschrieben wurden, mit der zweiten emulierten Einrichtung.

14. Hostsystem (200) zum Emulieren eines Zielsystems (100), wobei das Hostsystem (200) Folgendes umfasst:
einen oder mehrere Prozessoren (204);
einen Speicher (202), der an den einen oder die mehreren Prozessoren (204) gekoppelt ist;
einen Satz von durch einen Prozessor ausführbaren Anweisungen, die in dem Speicher (202) verkörpert sind, wobei die durch einen Prozessor ausführbaren Anweisungen Anweisungen zum Implementieren eines Verfahrens zum Lösen von Taktmanagementproblemen bei der Emulation des Zielsystems (100) auf dem Host-System (200) enthalten,
wobei der eine oder die mehreren Prozessoren (204) Folgendes umfassen:
Mittel zum Interpretieren eines ersten Satzes von Codeanweisungen eines Zielprogramms, um interpretierte Codeanweisungen zu erzeugen, die eine erste Komponente des Zielsystems (100) auf dem Host-System (200) emulieren;
Mittel zum Übersetzen eines zweiten Satzes von Codeanweisungen, um übersetzte Codeanweisungen zu erzeugen, die eine zweite Komponente des Zielsystems (100) auf dem Host-System (200) emulieren,
Mittel zum Ausführen der interpretierten Anweisungen, wobei die Zeitplanung der Ausführung der interpretierten Anweisungen auf einem festen Takt (207) basiert;
Mittel zum Ausführen der übersetzten Anweisungen, wobei die Zeitplanung der Ausführung der übersetzten Anweisungen auf einem veränderbaren Takt (217) basiert; und
Mittel zum Aufrechterhalten einer gewünschten Synchronisation zwischen den übersetzten Anweisungen und den interpretierten Anweisungen durch Anpassen der Taktrate des veränderbaren Taktes (217), Anpassen einer Zeitplanung einer Ausführung der übersetzten oder interpretierten Anweisungen oder Anpassen einer Zeitplanung eines Speicherzugriffs.

## Revendications

1. Logiciel informatique ayant un code de programme qui, lorsqu'il est exécuté par un ordinateur, amène l'ordinateur à exécuter un procédé pour résoudre des problèmes de gestion d'horloge dans l'émulation d'un système cible (100) sur un système hôte (200), le procédé comprenant les étapes suivantes :
interpréter un premier ensemble d'instructions de code d'un programme cible pour générer des instructions de code interprétées qui émulent un premier composant du système cible (100) sur le système hôte (200) ;
traduire un second ensemble d'instructions de code pour générer des instructions de code traduites qui émulent un second composant du système cible (100) sur le système hôte (200) ;
exécuter les instructions interprétées, où le timing de l'exécution des instructions interprétées est basé sur une horloge fixe (207) ;
exécuter les instructions traduites, où le timing de l'exécution des instructions traduites est basé sur une horloge variable (217) ; et
maintenir une synchronisation souhaitée entre les instructions traduites et les instructions interprétées en ajustant une fréquence d'horloge de l'horloge variable (217), en ajustant le timing d'une exécution des instructions traduites ou interprétées, ou en ajustant le timing de l'accès à la mémoire.

2. Logiciel informatique selon la revendication 1, dans lequel l'ajustement de la fréquence d'horloge de l'horloge variable, l'ajustement du timing d'exécution des instructions traduites ou interprétées, ou l'ajustement du timing de l'accès à la mémoire comprend de retenir l'exécution des instructions traduites ou l'accès à la mémoire lorsque l'horloge variable a une fréquence plus élevée que celle de l'horloge fixe.

3. Logiciel informatique selon la revendication 1, dans lequel les instructions traduites utilisent un compteur de cycles émulé pour estimer la durée que durera une opération.

4. Logiciel informatique selon la revendication 2, dans lequel retenir l'exécution des instructions traduites ou l'accès à la mémoire lorsque l'horloge variable a une fréquence plus élevée que celle de l'horloge fixe comprend d'exécuter un nombre prédéterminé de cycles émulés, de vérifier si l'horloge variable a une fréquence plus élevée que celle de l'horloge fixe ; et, si l'horloge variable a une fréquence plus élevée que celle de l'horloge fixe, de retenir l'horloge variable.

5. Logiciel informatique selon la revendication 1, dans lequel, dans une situation dans laquelle le dispositif hôte ne dispose pas de suffisamment de temps pour terminer une opération d'instruction traduite avant qu'une trame ne soit présentée à un dispositif d'affichage, ajuster la fréquence d'horloge de l'horloge variable, ajuster le timing d'exécution des instructions traduites ou interprétées ou ajuster le timing de l'accès à la mémoire comprend de répéter une trame courante pour fournir du temps supplémentaire pour terminer l'opération d'instruction traduite.

6. Logiciel informatique selon la revendication 1, dans lequel ajuster la fréquence d'horloge de l'horloge variable, ajuster le timing d'exécution des instructions traduites ou interprétées ou ajuster le timing de l'accès à la mémoire comprend les étapes suivantes :
rechercher une efficacité d'utilisation du second composant par une ou plusieurs parties du programme cible et ajuster la fréquence d'horloge de l'horloge variable sur la base de l'efficacité d'utilisation ;
ou dans lequel ajuster la fréquence d'horloge de l'horloge variable, ajuster le timing d'exécution des instructions traduites ou interprétées ou ajuster le timing d'un accès à la mémoire pour maintenir une synchronisation souhaitée entre les instructions traduites et les instructions interprétées inclut les étapes suivantes :
déterminer si un événement émulé peut être interrompu en raison d'une différence entre la fréquence d'horloge de l'horloge fixe et la fréquence d'horloge de l'horloge variable ; et
ajuster l'exécution des instructions traduites pour éviter une temporisation de l'événement émulé.

7. Logiciel informatique selon la revendication 6, dans lequel déterminer si un événement émulé peut être interrompu en raison d'une différence entre la fréquence d'horloge de l'horloge fixe et la fréquence d'horloge de l'horloge variable comprend de détecter si le programme cible a défini une valeur dans un registre de commande, puis a interrogé le registre de commande à plusieurs reprises pour attendre un résultat.

8. Logiciel informatique selon la revendication 7, dans lequel l'ajustement de l'exécution des instructions traduites pour éviter une temporisation comprend l'étape suivante :
modifier l'exécution de l'émulation du programme cible d'une manière qui évite la temporisation si le programme cible interroge le registre à un nombre de reprises plus élevé qu'un nombre prédéterminé.

9. Logiciel informatique selon la revendication 8, dans lequel modifier l'exécution de l'émulation du programme cible comprend d'éviter la temporisation en ralentissant l'émulation d'une marge suffisante pour empêcher la temporisation.

10. Logiciel informatique selon la revendication 8, dans lequel la modification de l'exécution de l'émulation du programme cible comprend de ne pas renvoyer de réponse au programme cible émulé jusqu'à ce qu'un état matériel change.

11. Logiciel informatique selon la revendication 8, dans lequel la modification de l'exécution de l'émulation du programme cible comprend d'analyser une section pertinente du programme cible et de déterminer si une opération d'interrogation se produit, ou non.

12. Logiciel informatique selon la revendication 7, comprenant en outre d'exécuter des fonctions non liées à la temporisation avec du matériel émulé tout en évitant une temporisation de l'événement émulé en ajustant l'exécution des instructions traduites.

13. Logiciel informatique selon la revendication 1, dans lequel l'exécution des instructions traduites et/ou interprétées comprend d'écrire une ou plusieurs instructions d'écriture à partir d'un premier dispositif émulé et de lire une ou plusieurs instructions d'écriture avec un second dispositif émulé, où l'ajustement de la fréquence d'horloge de l'horloge variable, l'ajustement du timing d'exécution des instructions traduites ou interprétées, ou l'ajustement du timing d'un accès à la mémoire comprend les étapes suivantes :
stocker les une ou plusieurs instructions d'écriture dans un journal dans l'ordre dans lequel elles ont été écrites, et lire les une ou plusieurs instructions d'écriture avec le second dispositif émulé dans l'ordre dans lequel elles ont été écrites.

14. Système hôte (200) destiné à émuler un système cible (100), le système hôte (200) comprenant :
un ou plusieurs processeurs (204) ;
une mémoire (202) couplée aux un ou plusieurs processeurs (204) ;
un ensemble d'instructions exécutables par un processeur intégrées dans la mémoire (202), les instructions exécutables par un processeur comprenant des instructions destinées à mettre en oeuvre un procédé pour résoudre des problèmes de gestion d'horloge dans l'émulation du système cible (100) sur le système hôte (200),
les un ou plusieurs processeurs (204) comprenant :
des moyens pour interpréter un premier ensemble d'instructions de code d'un programme cible pour générer des instructions de code interprétées qui émulent un premier composant du système cible (100) sur le système hôte (200) ;
des moyens pour traduire un second ensemble d'instructions de code pour générer des instructions de code traduites qui émulent un second composant du système cible (100) sur le système hôte (200) ;
des moyens pour exécuter les instructions interprétées, où le timing de l'exécution des instructions interprétées est basé sur une horloge fixe (207) ;
des moyens pour exécuter les instructions traduites, où le timing de l'exécution des instructions traduites est basé sur une horloge variable (217) ; et
des moyens pour maintenir une synchronisation souhaitée entre les instructions traduites et les instructions interprétées en ajustant la fréquence d'horloge de l'horloge variable (217), en ajustant le timing d'exécution des instructions traduites ou interprétées, ou en ajustant le timing de l'accès à la mémoire.
